# EUROPÄISCHE PATENTANMELDUNG

(11) **EP 2 395 635 A1**
(43) Veröffentlichungstag der Anmeldung: **14.12.2011**
(21) Anmeldenummer: 10006055.7
(22) Anmeldetag: 11.06.2010
(51) Int. Cl.: H02K 7/12, H02K 49/06, H02K 49/10, H02K 1/27

(54) **Permanentmagnetkupplung**

(71) Anmelder: Ringfeder Power-Transmission GmbH, 63868 Grosswallstadt (DE)
(72) Erfinder: Englert, Thomas, 63762 Großostheim (DE)
(74) Vertreter: Lorenz, Bernd Ingo Thaddeus

(57) **Zusammenfassung**

Die Erfindung betrifft eine Permanentmagnetkupplung für die synchrone Übertragung von Drehbewegungen mit einem ersten Rotor (1) und einem zweiten Rotor (2), die einen Innenrotor und einen Außenrotor bilden, wobei der erste Rotor (1) Permanentmagnete (3, 3"') und der zweite Rotor Permanentmagnete (3', 3") oder/und ein Hysteresematerial (6, 6') aufweist, wobei die Rotoren (1, 2) in einem sich in axialer Richtung (z) erstreckenden Überlappungsbereich durch einen radialen Spalt (S) getrennt sind und wobei die Permanentmagnetkupplung Verstellmittel für eine Längsverschiebung zwischen den Rotoren (1, 2) aufweist, um eine Verstellung des bis zu einem Durchrutschen der Permanentmagnetkupplung übertragbaren Drehmomentes zu ermöglichen. Erfindungsgemäß sind die Rotoren (1, 2) in Längsrichtung (z) gesehen kegelförmig oder stufenförmig ausgebildet.

## Beschreibung

Die Erfindung betrifft eine Permanentmagnetkupplung für die synchrone Übertragung von Drehbewegungen mit einem ersten Rotor und einem zweiten Rotor, die einen Innenrotor und einen Außenrotor bilden, wobei der erste Rotor Permanentmagnete und der zweite Rotor Permanentmagnete oder/und ein Hysteresematerial aufweist, wobei die Rotoren in einem sich in axialer Richtung erstreckenden Überlappungsbereich durch einen radialen Spalt getrennt sind und wobei die Permanentmagnetkupplung Verstellmittel für eine Längsverschiebung zwischen den Rotoren aufweist, um eine Verstellung des bis zu einem Durchrutschen der Permanentmagnetkupplung übertragbaren Drehmomentes zu ermöglichen. Die Rotoren sind koaxial angeordnet, wobei der erste Rotor, der Permanentmagnete aufweist, als innenrotor oder Außenrotor vorgesehen sein kann. Der zweite Rotor bildet entsprechend den Außen- bzw. Innenrotor und weist auch Permanentmagnete oder/und ein Hysteresematerial auf.

Permanentmagnetkupplungen ermöglichen eine verschleißfreie und berührungslose Übertragung von Drehmomenten über einen Spalt. Der Begriff Spalt bezieht sich in fachüblicher Weise allgemein auf den zwischen dem Innenrotor und dem Außenrotor gebildeten Abstand, in dem beispielsweise auch ein Spalttopf vorgesehen sein kann, welcher eine leckagefreie Abdichtung zwischen den Rotoren ermöglicht. So können Permanentmagnetkupplungen mit einem Spalttopf beispielsweise in Pumpen eingesetzt werden, wobei auch bei umweltbelasteten, giftigen oder anderweitig gefährlichen Stoffen eine erhöhte Sicherheit durch die räumliche Trennung gewährleistet wird. Weitere Einsatzgebiete sind Anwendungen, bei denen eine Drehmomentbegrenzung erforderlich ist, wobei bis zu einem vorgegebenen Drehmoment Innen rotor und Außenrotor eine synchrone Bewegung vollziehen und wobei die Permanentmagnetkupplung bei Erreichen des vorgegebenen Grenzwertes durchrutscht. Solche Eigenschaften sind insbesondere bei Fertigungs- und Bearbeitungsmaschinen von Vorteil, wenn beispielsweise eine Überlastung vermieden oder bei der Erzeugung einer Schraubverbindung ein vorgegebenes Anzugsmoment eingehalten werden soll. Da die Übertragung des Drehmomentes berührungslos erfolgt, führt das Durchrutschen in der Regel nicht zu einem Verschleiß der Kupplung, sodass diese für einen langzeitigen Einsatz unter starken Belastungen geeignet ist.

Die Übertragung des Drehmomentes erfolgt durch die über den Spalt wirkenden magnetischen Kräfte. Unterhalb des maximal zu übertragenden Drehmomentes ist bei der Verwendung eines Hysteresematerials an einem der Rotoren dieses durch die Permanentmagnete des anderen Rotors in einer bestimmten Weise magnetisiert. Unterhalb des maximal zu übertragenden Drehmomentes bleibt die Magnetisierung des Hysteresematerials auch bei dem Auftreten eines Gegenfeldes erhalten. Erst bei der Annäherung an den vorgegeben Grenzwert des maximal zu übertragenden Drehmomentes setzt eine Ummagnetisierung des Hysteresematerials ein, wodurch die Kupplung zu rutschen beginnt. Als Hysteresematerial ist beispielsweise AlNiCo-Material geeignet, wobei eine solche Legierung neben Aluminium (AI), Nickel (Ni) und Kobalt (Co) auch Eisen (Fe), Kupfer (Cu) sowie Titan (Ti) enthalten kann.

Die vorliegende Erfindung bezieht sich konkret auf eine Permanentmagnetkupplung, bei der das zu übertragende Drehmoment durch eine Längsverschiebung der Rotoren gegeneinander einstellbar ist. Eine gattungsgemäße Ausgestaltung ist aus der DE 10 2005 041 973 A1 bekannt. Der Innenrotor und der koaxial darum angeordnete Außenrotor weisen jeweils eine zylindrische Form auf, wobei der Innenrotor durch Verstellmittel in axialer Richtung gegenüber dem Außenrotor positioniert werden kann. Durch die Verstellung kann die

Überdeckung zwischen den Permanentmagneten des Innenrotors und den Permanentmagneten des Außenrotors verändert werden, wodurch das bis zu einem Durchrutschen der Permanentmagnetkupplung übertragbare Drehmoment einstellbar ist. Durch eine axiale Verstellung des Innenrotors gegenüber dem Außenrotor kann das zu übertragende Drehmoment ausgehend von einem Höchstwert bei vollständiger Überdeckung bis nahezu auf 0 frei eingestellt werden. Nachteilig ist dabei, dass gemäß der bekannten Bauweise insgesamt ein großer Stellweg sowie ein großer Bauraum erforderlich sind.

Vor diesem Hintergrund liegt der Erfindung die Aufgabe zugrunde, eine Permanentmagnetkupplung für die synchrone Übertragung von Drehbewegungen anzugeben, welche bei einem kompakten Aufbau die Übertragung großer Drehmomente ermöglicht. Insbesondere ist es Ziel der Erfindung, den für eine Einstellung erforderlichen Stellweg zu verringern.

Ausgehend von einer Permanentmagnetkupplung mit den eingangs beschriebenen Merkmalen wird die Aufgabe erfindungsgemäß dadurch gelöst, dass die Rotoren in Längsrichtung gesehen kegelförmig oder stufenförmig ausgebildet sind. Durch diese Ausgestaltung wird ein kurzer Stellweg und damit auch eine kompakte Bauweise auch bei großen übertragbaren Drehmomenten erreicht. Bei einer Verschiebung der beiden Rotoren relativ zueinander in Längsrichtung wird nämlich nicht nur die gegenseitige Überdeckung sondern auch der Spaltabstand verändert. Ausgehend von einer vollständigen Überdeckung und einem dann minimalen Spalt wird bei einem Herausziehen des Innenrotors aus dem Außenrotor aufgrund der kegelförmigen oder stufenförmigen Ausgestaltung das Spaltmaß erhöht, wodurch die zwischen den Permanentmagneten des ersten Rotors sowie dem Hysteresematerial bzw. den Permanentmagneten des zweiten Rotors wirkenden Kräfte stark verringert werden.

Wie zuvor erläutert, kann durch die Ausrichtung der Permanentmagnete der für den Eintritt des von dem Permanentmagneten erzeugten Flusses zur Verfügung stehende Raum maximiert werden. Gemäß einer bevorzugten Weiterbildung ist vorgesehen, dass die Permanentmagnete des ersten Rotors, die mit ihrer Magnetisierungsrichtung parallel zu dem radialen Spalt ausgerichtet sind, im Querschnitt mit einer Höhe in radialer Richtung und einer breiten Umfangrichtung zumindest in etwa rechteckigförmig sind, wobei das Verhältnis von Höhe zu Breite vorzugsweise größer als 2, besonders bevorzugt größer als 3,5 ist. Insbesondere können zumindest sämtliche Permanentmagnete des ersten Rotors quaderförmig oder im Wesentlichen quaderförmig ausgebildet sein. Dann ergibt sich der Vorteil, dass Permanentmagnete in Standardmessungen eingesetzt werden können, wodurch sich insgesamt geringe Herstellungskosten ergeben. Unter im Wesentlichen quaderförmig werden auch Ausgestaltungen verstanden, die entsprechend der kegelförmigen Ausgestaltung von Innenrotor und Außenrotor an ihren Enden schräg abgeschnitten sind und/oder Abrundungen zur Anpassung an die Form des Spaltes bzw. zur Bildung eines Spaltes mit gleichmäßigem Spaltmaß aufweisen.

Ein weiterer Aspekt der Erfindung betrifft die Anordnung der Permanentmagnete an dem ersten Rotor. So umfasst der erste Rotor gemäß einer besonders vorteilhaften Ausgestaltung Permanentmagnete, die mit ihrer Magnetisierungsrichtung senkrecht zur Längsrichtung und parallel zu dem radialen Spalt ausgerichtet sind. Durch eine solche Ausrichtung der Permanentmagnete können diese sich in radialer Richtung über einen großen Bereich erstrecken. Der magnetische Fluss tritt aus den Permanentmagneten in etwa in Umfangrichtung aus, wobei die Magnetfeldlinien dann in einem Bogen in Richtung des Spaltes verlaufen. Jeweils aufeinander folgende Permanentmagnete, die üblicherweise entgegengesetzt gepolt sind, bilden zusammen im Bereich des jeweiligen Zwischenraumes einen effektiven Pol des ersten Rotors. Erfindungsgemäß kann im Querschnitt der Raum, welcher für die Anordnung von Permanentmagneten nutzbar ist, maximiert werden. Es ergibt sich dadurch der Vorteil, dass die Permanentmagnetkupplung in Kombination mit der zuvor beschriebenen Kegel- oder Stufenform noch kompakter und platzsparender konstruiert werden kann.

Der erste Rotor kann entweder den Innenrotor oder den Außenroter bilden. Wenn der erste Rotor der Innenrotor ist, erstrecken sich die Permanentmagnete dieses Rotors, die mit ihrer Magnetisierungsrichtung parallel zu dem radialen Spalt ausgerichtet sind, vorzugsweise zumindest über 40% des Außenradius des Innenrotors. Es muss lediglich gewährleistet sein, dass der Träger des innenrotors eine ausreichende Festigkeit aufweist, um das maximal einstellbare Drehmoment übertragen zu können.

Die Permanentmagnete des ersten Rotors, die mit ihrer Magnetisierungsrichtung parallel zu dem radialen Spalt ausgerichtet sind, sind in Umfangsrichtung gesehen üblicherweise mit abwechselnder Orientierung der Magnetisierung angeordnet. Zwischen den Permanentmagneten des ersten Rotors kann ein Füllmaterial vorgesehen sein, um eine bestimmte räumliche Verteilung des magnetischen Flusses zu erreichen. Insbesondere kann ein Material mit einer hohen Permeabilität, beispielsweise ein weiches magnetisches Material vorgesehen sein. Geeignet ist insbesondere Weicheisen, welches in Form von geschichtetem Elektroblech vorliegen kann. Neben der Ausbildung einer gewünschten Feldverteilung kann das Füllmaterial auch dazu beitragen, die Magnete an dem ersten Rotor zu halten und dem ersten Rotor im Bereich des Luftspaltes eine gleichmäßige Oberflächenstruktur zu verleihen.

Gemäß einer Weiterbildung der Erfindung bilden die Permanentmagnete des ersten Rotors, die mit ihrer Magnetisierungsrichtung parallel zu dem radialen Spalt ausgerichtet sind, eine erste Gruppe, wobei zwischen jeweils zwei aufeinanderfolgenden Permanentmagneten der ersten Gruppe ein ausgehend von dem radialen Spalt zurückversetzt angeordneter Permanentmagnet einer zweiten Gruppe angeordnet ist und wobei die Magnetisierungsrichtungen der Permanentmagnete der zweiten Gruppe senkrecht zu dem Spalt in radialer Richtung wechselweise nach innen und außen weisen. Die Anordnung der Permanentmagnete des ersten Rotors erfolgt derart, dass an den einzelnen Zwischenräumen die angrenzenden Magnete mit gleichnamigen Polen in Richtung des jeweils betrachteten Zwischenraums weisen. Durch die Anordnung der einzelnen Magnete um die Zwischenräume herum wird die für den Eintritt des magnetischen Flusses zur Verfügung stehende Fläche vergrößert. In Bezug auf die Wechselwirkung mit dem zweiten Rotor bilden die einzelnen Zwischenräume durch die Überlagerung der von den angrenzenden Permanentmagneten erzeugten Felder effektive Pole mit einer erhöhten Flussdichte, wodurch entweder das zu erreichende Haltemoment erhöht oder bei einem vorgegebenen Haltemoment die Baugröße reduziert werden kann.

Dadurch, dass gemäß der beschriebenen Weiterbildung die Zwischenräume mit den daran angrenzenden Permanentmagneten einen effektiven Pol bilden, ist keine aufwändige Ausgestaltung der einzelnen Permanentmagnete erforderlich. Insbesondere können für die Permanentmagnete der ersten Gruppe sowie der zweiten Gruppe einfache Quaderformen vorgesehen sein. Die beispielsweise durch Sintern gefertigten und gegebenenfalls auf ein vorgegebenes Maß zugeschnittenen Permanentmagnete sind kostengünstig und können mit geringen Materialverlusten gefertigt werden. Auch ein Rückgriff auf handelsübliche Standardmaße ist sowohl für die erste Gruppe als auch für die zweite Gruppe möglich, wodurch insgesamt sehr geringe Fertigungskosten auch bei Kleinserien oder Einzelanfertigungen erreicht werden können.

Die Permanentmagnete des ersten Rotors sind zweckmäßigerweise auf einen Träger angeordnet, der beispielsweise aus einem ferromagnetischen Material, beispielsweise geschichtetem Elektroblech, bestehen kann.

Die Permanentmagnete können aus üblichen Magnetwerkstoffen wie beispielsweise NdFeB, NeFeBo oder SmCo gebildet sein. Auch bezüglich der Materialauswahl ist es von Vorteil, dass einfache quaderförmige Magnete eingesetzt werden können, sodass an das jeweilige Herstellungsverfahren keine besonderen Anforderungen zu stellen sind.

Sofern an dem zweiten Rotor Permanentmagnete vorgesehen sind, können diese mit ihrer Magnetisierungsrichtung entweder senkrecht oder parallel zu dem Luftspalt stehen. Möglich ist darüber hinaus auch eine Ausgestaltung, bei der wie zuvor beschrieben eine erste Gruppe und eine zweite Gruppe von Permanentmagneten mit jeweils unterschiedlicher Magnetisierungsrichtung vorgesehen sind. Wenn der zweite Rotor ein Hysteresematerial aufweist, kann dieses entweder als durchgehender Ring oder in Form einer Vielzahl von Segmenten vorliegen.

Bei Hysteresematerial erfolgt eine Ummagnetisierung erst bei dem Vorliegen eines gewissen Gegenfeldes. Entsprechende Permanentmagnetkupplungen werden in der Praxis auch als Hysteresekupplungen bezeichnet. Bei kleinen zu übertragenden Drehmomenten erfolgt eine synchrone Übertragung. Unterhalb des einstellbaren maximal zu übertragenden Drehmomentes ist das magnetisierbare Material nämlich durch die Permanentmagnete des ersten Rotors in einer bestimmten Weise magnetisiert, sodass dann eine synchrone Bewegung der Rotoren erfolgt. Bei der Annäherung an den eingestellten Grenzwert beginnt eine Ummagnetisierung des Hysteresematerials und entsprechend ein Rutschen der Kupplung, sodass dann keine synchrone Bewegung mehr vorliegt. Da in dem magnetisierbaren Material die Feldverteilung nicht dauerhaft vorgegeben ist, wird üblicherweise ein weicheres Schlupfverhalten als bei Permanentmagnetkupplungen beobachtet, bei denen wie zuvor beschrieben beide Rotoren mit Permanentmagneten belegt sind. Durch die Auswahl des Materials können die Ummagnetisierungsverluste (Hystereseverluste) und damit auch eine Abbremsung durch Umwandlung in Wärmeenergie eingestellt werden. Bei der Abbremsung durch eine Umwandlung in Wärmeenergie ist bei der Auslegung der Permanentmagnetkupplung auch eine ausreichende Kühlung vorzusehen.

Als Hysteresematerial ist beispielsweise AlNiCo-Material geeignet, wobei eine solche Legierung neben Aluminium (Al), Nickel (Ni) und Kobalt (Co) auch Eisen (Fe), Kupfer (Cu) sowie Titan (Ti) enthalten.

Möglich ist es schließlich auch, dass der zweite Rotor sowohl Permanentmagnete als auch magnetisierbares Material, insbesondere Hysteresematerial aufweist, wodurch die Eigenschaften der Kupplung gemäß den jeweiligen Erfordernissen genauer eingestellt werden können.

Die Erfindung wird im Folgenden anhand einer lediglich ein Ausführungsbeispiel darstellenden Zeichnung erläutert. Es zeigen schematisch:

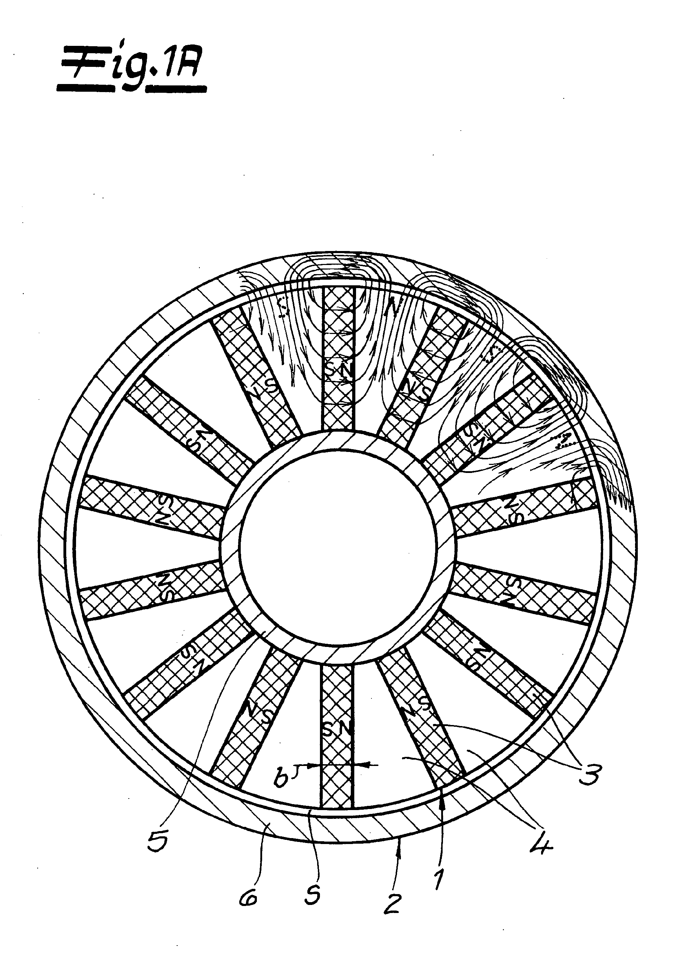

- Fig. 1a: einen Querschnitt durch eine erfindungsgemäße Permanentmagnetkupplung,
- Fig. 1 b: einen Längsschnitt durch die Permanentmagnetkupplung gemäß der Fig. 1a,
- Fig. 2: eine alternative Ausgestaltung in einer Ansicht gemäß der Fig. 1b,
- Fig. 3 bis Fig. 5: alternative Ausgestaltungen, jeweils in einer Ansicht gemäß der Fig. 1 a.

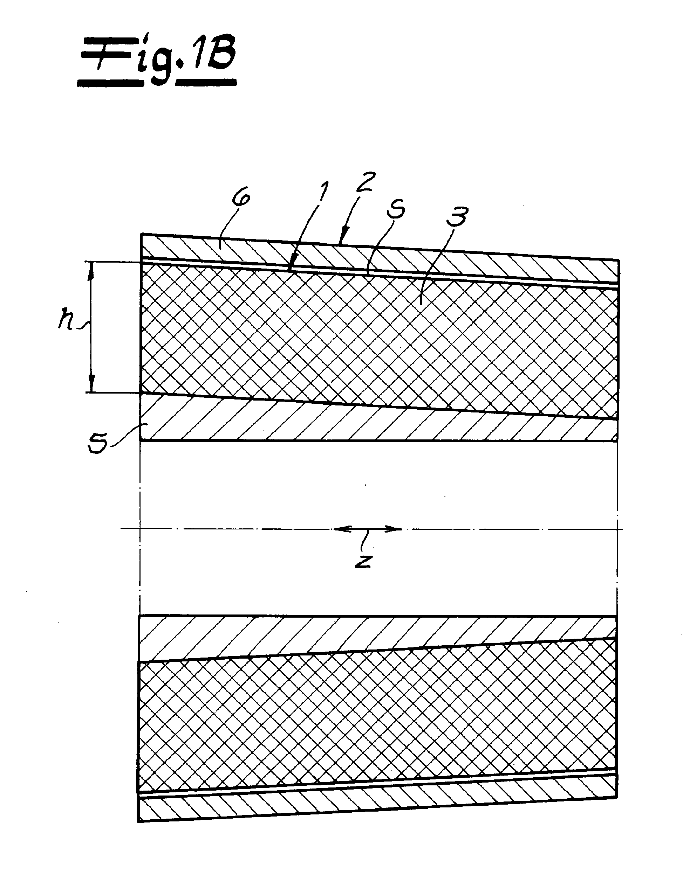

Die Fig. 1 a und 1 b zeigen eine Permanentmagnetkupplung für die Übertragung von Drehmomenten mit einem ersten Rotor 1 als Innenrotor und einem zweiten Rotor 2 als Außenrotor, die durch einen radialen Spalt S getrennt sind. Gemäß der Fig. 1b sind der erste Rotor 1 und der zweite Rotor 2 in gleicher Weise kegelförmig ausgebildet, wobei durch nicht dargestellte Verstellmittel der Innenrotor aus dem Außenrotor herausgezogen werden kann, wodurch einerseits die Überlappung zwischen dem ersten Rotor 1 und dem zweiten Rotor 2 verringert und andererseits der radiale Spalt S vergrößert werden. Beides führt dazu, dass die zwischen dem ersten Rotor 1 und dem zweiten Rotor 2 wirkenden magnetischen Kräfte verringert werden, sodass entsprechend auch das maximal zu übertragende Drehmoment bis zu einem Durchrutschen reduziert ist. Durch die nicht dargestellten Verstellmittel kann das maximal übertragbare Drehmoment damit genau eingestellt werden, wobei insbesondere aufgrund der Vergrößerung des Luftspaltes S ein vergleichsweise kleiner Stellweg ausreichend ist, um eine starke Reduzierung des maximal zu übertragenden Drehmomentes zu bewirken.

Wie der Fig. 1a zu entnehmen ist, umfasst der erste Rotor 1 Permanentmagnete 3, die mit ihrer Magnetisierungsrichtung senkrecht zur Längsrichtung z und parallel zu dem radialen Spalt S ausgerichtet sind. In Umfangsrichtung gesehen wechselt sich die Magnetisierungsrichtung dieser Permanentmagnete 3 ab. Der magnetische Fluss tritt aus den Permanentmagneten 3 in etwa in Umfangrichtung aus und wird dann in Zwischenräumen 4, die mit geschichteten Elektroblechen ausgefüllt sind, in Richtung des Spaltes S umgelenkt. Durch die Überlagerung des magnetischen Flusses von jeweils benachbarten Permanentmagneten 3 werden an den Zwischenräumen 4 effektive Pole gebildet.

Aufgrund der beschriebenen Anordnung der Permanentmagnete 3 kann der Bauraum der Permanentmagnetkupplung besonders effektiv genutzt werden. Die Permanentmagnete 3 des ersten Rotors 1, die parallel zu dem radialen Spalt S ausgerichtet sind, weisen eine Höhe h in radialer Richtung und eine Breite b in Umfangrichtung auf und sind im Querschnitt rechteckigförmig, wobei das Verhältnis von Höhe h zu Breite b größer als 2 ist. Abgesehen davon, dass gemäß der Fig. 1b die beschriebenen Permanentmagnete 3 an den Enden des ersten Rotors 1 gerade abgeschnitten sind, weisen diese eine Quaderform auf.

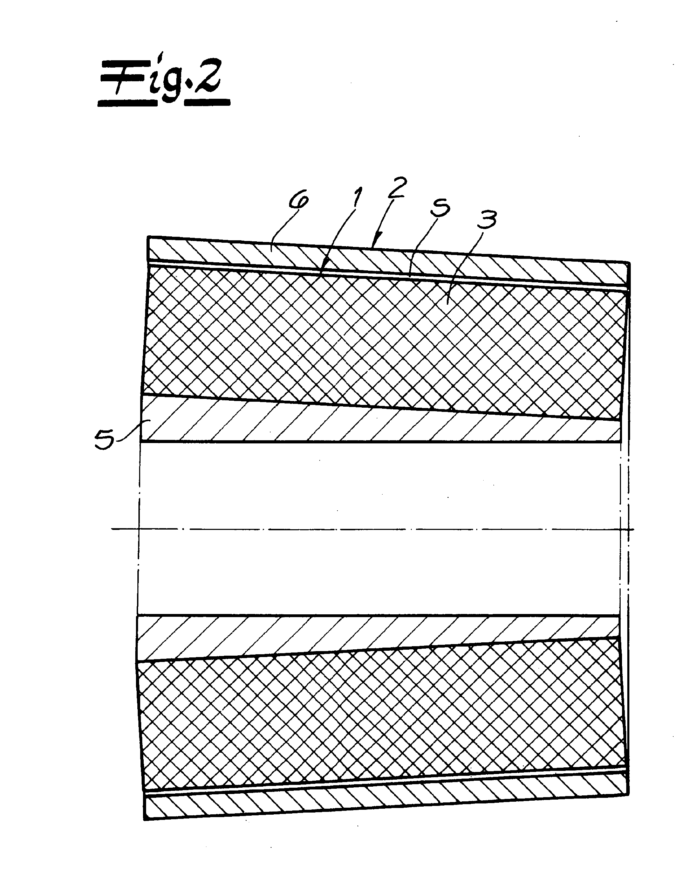

Gemäß der alternativen Ausgestaltung nach Fig. 2 können auch völlig quaderförmige Permanentmagnete 3 vorgesehen sein, wobei dann entsprechend der erste Rotor 1 an seinen Enden leicht schräg ist.

Gemäß der Ausführung der Fig. 1a und 1b sind die Permanentmagnete 3 des ersten Rotors 1 auf einem gemeinsamen Träger 5 angeordnet.

Der zweite Rotor 2 ist in dem beschriebenen Ausführungsbeispiel aus einem durchgehenden Ring von Hysteresematerial 6 gebildet. Das Hysteresematerial 6 weist eine durch die Permanentmagnete 3 des ersten Rotors 1 eingeprägte Magnetisierung auf, die erst bei dem Übersteigen eines Gegenfeldes durch Ummagnetisierung veränderbar ist, wobei die Permanentmagnetkupplung dann durchrutscht.

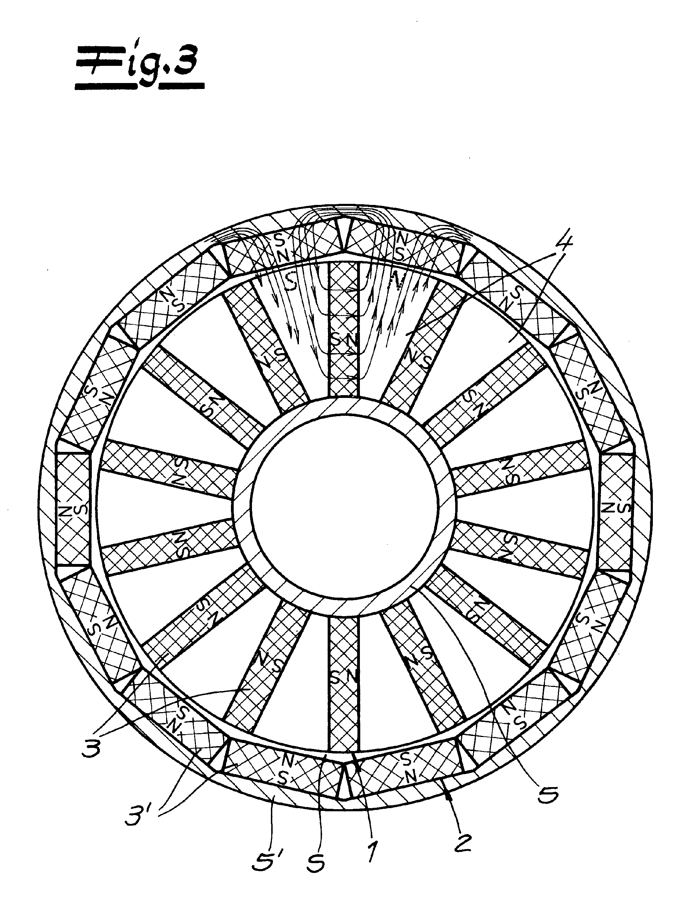

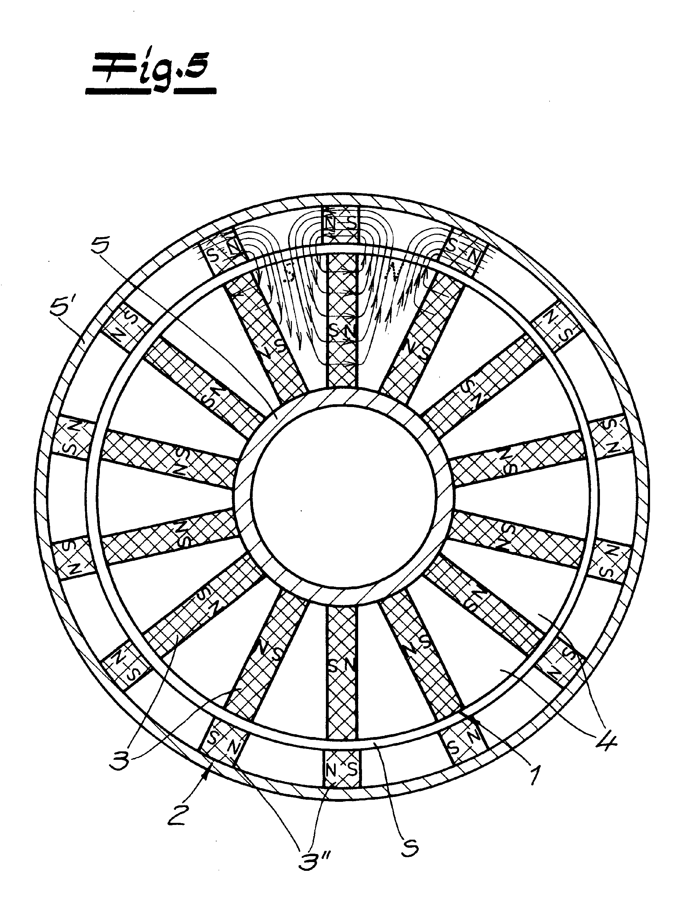

Die Fig. 3 bis 5 zeigen in einer Ansicht entsprechend der Fig. 1a exemplarisch alternative Ausgestaltungen von erfindungsgemäßen Permanentmagnetkupplungen. Gemäß den Fig. 3 und 5 sind bei dem zweiten Rotor 2 als Außenrotor auch Permanentmagnete 3', 3" vorgesehen, deren Magnetisierungsrichtung entweder senkrecht zu dem Luftspalt S steht (Fig. 3) oder die wie bei dem ersten Rotor 1 parallel zu dem Spalt S ausgerichtet ist (Fig. 5). Gemäß der Fig. 3 ist des Weiteren ein Träger 5' vorgesehen, welcher an der von dem Spalt S abgewandten Seite der Permanentmagnete 3' als Rückflusselement fungiert.

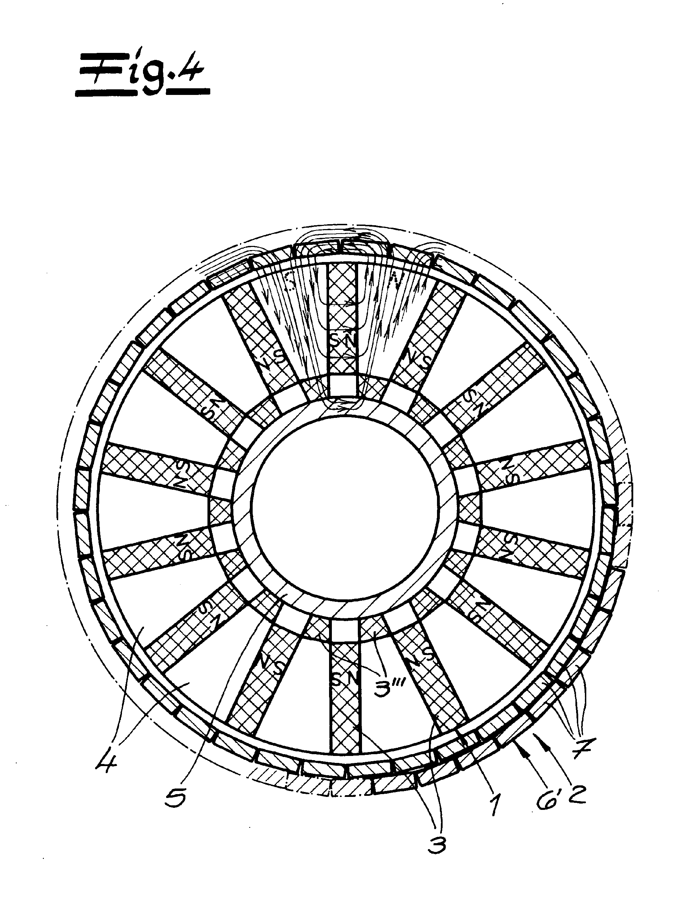

Fig. 4 zeigt eine Ausgestaltung, bei der die Permanentmagnete 3 des ersten Rotors 1, die mit ihrer Magnetisierungsrichtung parallel zum radialen Spalt S ausgerichtet sind, eine erste Gruppe bilden, wobei zwischen jeweils zwei aufeinanderfolgenden Permanentmagneten 3 der ersten Gruppe ein ausgehend von dem radialen Spalt S zurückversetzt angeordneter Permanentmagnet 3"' einer zweiten Gruppe angeordnet ist und wobei die Magnetisierungsrichtungen der Permanentmagnete 3"' der zweiten Gruppe senkrecht zu dem Spalt S in radialer Richtung wechselweise nach innen und außen weisen. Entsprechend tritt an den Zwischenräumen 4 der magnetische Fluss der jeweils umliegenden Permanentmagnete 3, 3"' an drei Seiten ein, wodurch insgesamt eine weitere Flusskonzentration erreicht werden kann. Ähnlich wie in der Fig. 1 a ist an dem zweiten Rotor 2 als Außenrotor Hysteresematerial 6' vorgesehen, welches jedoch in Form einer Vielzahl von Segmenten 7 vorliegt.

## Patentansprüche

1. Permanentmagnetkupplung für die synchrone Übertragung von Drehbewegungen mit einem ersten Rotor (1) und einem zweiten Rotor (2), die einen Innenrotor und einen Außenrotor bilden, wobei der erste Rotor (1) Permanentmagnete (3, 3"') und der zweite Rotor Permanentmagnete (3', 3") und/oder ein Hysteresematerial (6, 6') aufweist, wobei die Rotoren (1, 2) in einem sich in axialer Richtung (z) erstreckenden Überlappungsbereich durch einen radialen Spalt (S) getrennt sind und wobei die Permanentmagnetkupplung Verstellmittel für eine Längsverschiebung zwischen den Rotoren (1, 2) aufweist, um eine Verstellung des bis zu einem Durchrutschen der Permanentmagnetkupplung übertragbaren Drehmomentes zu ermöglichen, **dadurch gekennzeichnet, dass** die Rotoren (1, 2) in Längsrichtung (z) gesehen kegelförmig oder stufenförmig ausgebildet sind.

2. Permanentmagnetkupplung nach Anspruch 1, **dadurch gekennzeichnet, dass** der erste Rotor (1) Permanentmagnete (3) umfasst, die mit ihrer Magnetisierungsrichtung senkrecht zur Längsrichtung (z) und parallel zu dem radialen Spalt (S) ausgerichtet sind.

3. Permanentmagnetkupplung nach Anspruch 2, **dadurch gekennzeichnet, dass** die Permanentmagnete (3) des ersten Rotors (1), die mit ihrer Magnetisierungsrichtung parallel zu dem radialen Spalt (S) ausgerichtet sind, im Querschnitt mit einer Höhe (h) in radialer Richtung und einer Breite (b) in Umfangrichtung zumindest in etwa rechteckförmig sind, wobei das Verhältnis von Höhe (h) zu Breite (b) größer als 2 ist.

4. Permanentmagnetkupplung nach Anspruch 2 oder 3, **dadurch gekennzeichnet, dass** zumindest die Permanentmagnete (3) des ersten Rotors (1), die mit ihrer Magnetisierungsrichtung parallel zu dem radialen Spalt (S) ausgerichtet sind, quaderförmig oder im Wesentlichen quaderförmig sind.

5. Permanentmagnetkupplung nach einem der Ansprüche 2 bis 4, **dadurch gekennzeichnet, dass** der erste Rotor (1) den Innenrotor bildet.

6. Permanentmagnetkupplung nach Anspruch 5, **dadurch gekennzeichnet, dass** die Permanentmagnete (3) des ersten Rotors (1), die mit ihrer Magnetisierungsrichtung parallel zu dem radialen Spalt (S) ausgerichtet sind, sich zumindest über 40% des Außenradius des Innenrotors erstrecken.

7. Permanentmagnetkupplung nach einem der Ansprüche 2 bis 6, **dadurch gekennzeichnet, dass** die Permanentmagnete (3) des ersten Rotors (1), die mit ihrer Magnetisierungsrichtung parallel zu dem radialen Spalt (S) ausgerichtet sind, in Umfangrichtung gesehen mit abwechselnder Orientierung der Magnetisierung angeordnet sind.

8. Permanentmagnetkupplung nach einem der Ansprüche 2 bis 7, **dadurch gekennzeichnet, dass** zwischen den Permanentmagneten (3, 3"') des ersten Rotors (1) ein Füllmaterial angeordnet ist.

9. Permanentmagnetkupplung nach einem der Ansprüche 2 bis 8, **dadurch gekennzeichnet, dass** die Permanentmagnete (3) des ersten Rotors (1), die mit ihrer Magnetisierungsrichtung parallel zu dem radialen Spalt (S) ausgerichtet sind, eine erste Gruppe bilden, wobei zwischen jeweils zwei aufeinanderfolgenden Permanentmagneten (3) der ersten Gruppe ein ausgehend von dem radialen Spalt (S) zurückversetzt angeordneter Permanentmagnet (3"') einer zweiten Gruppe angeordnet ist und wobei die Magnetisierungsrichtungen der Permanentmagnete (3"') der zweiten Gruppe senkrecht zu dem Spalt (S) in radialen Richtung wechselweise nach innen und außen weisen.

10. Permanentmagnetkupplung nach einem der Ansprüche 1 bis 9, **dadurch gekennzeichnet, dass** der zweite Rotor (2) Permanentmagnete (3") umfasst, die mit ihrer Magnetisierungsrichtung senkrecht zur Längsrichtung (z) und parallel zu dem radialen Spalt (S) ausgerichtet sind.

11. Permanentmagnetkupplung nach einem der Ansprüche 1 bis 9, **dadurch gekennzeichnet, dass** der zweite Rotor (2) Hysteresematerial (6') in Form einer Vielzahl von Segmenten (7) aufweist.
